# EUROPÄISCHE PATENTSCHRIFT

(11) **EP 1 280 249 B1**
(45) Veröffentlichungstag und Bekanntmachung des Hinweises auf die Patenterteilung: **13.03.2019**
(21) Anmeldenummer: 02405596.4
(22) Anmeldetag: 12.07.2002
(51) Int. Cl.: H02H 7/06

(54) **Schutz- und Überwachungsvorrichtung für einen Generator sowie Anwendung einer solchen Schutz- und Überwachungsvorrichtung**
Protection and monitoring device for a generator and application of such a device
Dispositif de protection et de surveillance d'un générateur et utilisation d'un tel dispositif

(30) Priorität: 27.07.2001 CH 14012001
(43) Veröffentlichungstag der Anmeldung: 29.01.2003
(73) Patentinhaber: General Electric Technology GmbH, 5400 Baden (CH)
(72) Erfinder: Hobelsberger, Max, 5303 Würenlingen (CH); Kirchhoff, Ingo, 8055 Zürich (CH); Kohler, René, 5116 Schinznach-Bad (CH); Posedel, Zlatimir, 5432 Neuenhof (CH)
(74) Vertreter: General Electric Technology GmbH

(56) Entgegenhaltungen:
- DE-A- 19 742 622
- DE-U- 8 517 568
- US-A- 4 831 295

## Beschreibung

### TECHNISCHES GEBIET

Die vorliegende Erfindung bezieht sich auf das Gebiet der Technik von Generatoren zur Erzeugung elektrischer Leistung. Sie betrifft eine Schutz- und Ueberwachungsvorrichtung für einen Generator gemäss dem Oberbegriff des Anspruchs 1, sowie die Anwendung einer solchen Schutz- und Ueberwachungsvorrichtung.

Eine Schutz- und Ueberwachungsvorrichtung der genannten Art ist z.B. aus der Druckschrift EP-A1-0 271 678 bekannt.

### STAND DER TECHNIK

Wie in der eingangs genannten Druckschrift EP-A1-0 271 678 und der späteren Druckschrift DE-A1-197 42 622 beschrieben, können an der Generatorwelle eines Generators, der üblicherweise Teil einer Turbogruppe ist, aus verschiedenen Gründen Wellenspannungen und Wellenströme auftreten, deren Frequenzspektrum vom Gleichstrom bis zu Frequenzen reicht, die mit der Rotationsfrequenz des Generators, dessen Bauweise (Polpaarzahl), aber auch mit den Frequenzen eines Erregungssystems des Generators zusammenhängen.

Die Wellenspannungen und Wellenströme stellen eine Gefahr für verschiedene Komponenten des Generators dar und können zu Schäden am Generator führen, wenn sie nicht auf ein tolerierbares Mass reduziert, respektive keine Schutzmassnahmen getroffen werden. Hierzu wurden in der Vergangenheit an der Generatorwelle spezielle Vorkehrungen getroffen, indem beispielsweise auf der Nichtantriebsseite des Generators Isolierstrecken eingebaut und auf der Antriebsseite die Generatorwelle über Bürsten oder Kupferlitzen mit dem Erdpotential verbunden wurde. Um hochfrequente Spannungen kontrolliert zu erden, wurde auch vorgeschlagen, die Generatorwelle an der Nichtantriebsseite mittels eines Gleitkontaktes über eine Kapazität wechselspannungsmässig an das Erdpotential anzukoppeln.

Die Wellenspannungen und Wellenströme können aber auch zur Ueberwachung der Funktionssicherheit und Funktionstüchtigkeit des Wellenstranges sowie der Wellenerdung herangezogen werden. Die eingangs genannte Druckschrift EP-A1-0 271 678 gibt dazu eine Ueberwachungs- und Auswerteschaltung an, die auf der Nichtantriebsseite des Generators durch Parallelschaltung eines Widerstandes zur Ableitungskapazität einen Strompfad schafft und maschinentypische Frequenzkomponenten in den durch diesen Pfad fliessenden Strömen auswertet. Die RC-Kombination ergibt eine zuverlässige Verbindung zwischen Welle und Erdpotential, welche sowohl statische Aufladungen als auch niederfrequente Ströme und höherfrequente Spannungen auf beispielsweise für die Wellenlager ungefährliche Beträge reduziert. Durch das Einfügen des Parallelwiderstandes könnte sogar auf die ohmsche Erdung auf der Antriebsseite verzichtet werden.

Ein anderer Vorschlag (DE-A1-197 42 622) geht dahin, auf der Antriebsseite den durch eine Erdungsstrecke der Generatorwelle fliessenden Wellenstrom zu messen und den zeitlichen Verlauf oder eine Frequenz des Wellenstromes zu bestimmen, aus der dann die Ursache des Wellenstromes abgeleitet wird.

Es können in der Erdungsstrecke gleichwohl hohe Ströme und Spannungen auftreten, die beherrscht werden müssen. Die EP-A1-0 271 678 schlägt zur Abschaltung von übermässigen Strömen eine Sicherung in Serie vor. Gegen zu hohe Spannungen, wie sie z.B. auftreten, wenn die Generatorwelle mit einer Hochspannungsquelle niedriger Impedanz in Kontakt kommt, sind jedoch keine Vorkehrungen getroffen.

Die DE-A1-197 42 622 trifft weder gegen zu hohe Ströme noch zu hohe Spannungen Vorkehrungen.

Aus der Druckschrift WO 99/17433 A2 ist es bekannt, zum Überspannungsschutz der Feldwicklung eines Generators eine schaltbare Schutzeinrichtung vorzusehen, die zusammen mit einem Begrenzungswiderstand der Feldwicklung parallelgeschaltet ist und diese überbrücken kann.

### DARSTELLUNG DER ERFINDUNG

Es ist daher Aufgabe der Erfindung, eine Schutz- und Ueberwachungsvorrichtung für eine Generatorwelle zu schaffen, welche die Nachteile bisheriger Lösungen beseitigt und bei gleichzeitig einfachem Aufbau und vielseitiger Einsetzbarkeit gegen Ueberspannungen auf der Generatorwelle abgesichert ist, sowie eine vorteilhafte Anwendung der Schutz- und Ueberwachungsvorrichtung anzugeben.

Die Aufgabe wird durch die Gesamtheit der Merkmale der Ansprüche 1 und 9 gelöst. Der Kern der Erfindung besteht darin, mindestens ein Mittel zur Ueberbrükkung der RC-Parallelschaltung vorzusehen, die bei einem Auftreten von Ueberspannung an der Generatorwelle die RC-Parallelschaltung gezielt kurzschliessen und so die an der Vorrichtung abfallende Spannung auf ein tolerierbares Mass reduzieren.

Gemäss einer ersten bevorzugten Ausgestaltung der Erfindung ist zwischen der Parallelschaltung und dem Erdungsanschluss ein Messwiderstand zu der Parallelschaltung in Serie geschaltet ist, wobei die Serieschaltung aus dem Messwiderstand und der Parallelschaltung durch die Ueberbrückungsmittel überbrückbar ist. Hierdurch kann auf einfache Weise der zur Erde abfliessende Wellenstrom gemessen und sowohl bezüglich dem zeitlichen Verlauf als auch bezüglich der auftretenden Frequenzen ausgewertet und zur Ueberwachung der Wellenerdung herangezogen werden.

Um eine Sicherheit gegen übermässige Ströme zu erreichen, ist es von Vorteil, wenn gemäss einer zweiten Ausgestaltung der Erfindung zwischen der Parallelschaltung und der Kontaktvorrichtung eine Sicherung zu der Parallelschaltung in Serie geschaltet ist, und wenn die Serieschaltung aus dem Messwiderstand, der Parallelschaltung und der Sicherung durch die Ueberbrückungsmittel überbrückbar ist. Es hat sich dabei bewährt, dass die Sicherung einen Nennwert von etwa 2A aufweist.

Damit auch nach dem Auslösen der Sicherung statische Ladungen von der Generatorwelle sicher gegen Erde abgeleitet werden können, ist es zweckmässig, wenn gemäss einer weiteren Ausgestaltung der Erfindung der Sicherung ein hochohmiger Widerstand parallel geschaltet ist.

Der Ueberspannungsschutz ist besonders sicher und wartungsarm, wenn Ueberbrückungsmittel ein steuerbares Schaltelement, insbesondere einen Triac, umfassen, welches vorzugsweise durchschaltet, wenn die an der Schutz- und Ueberwachungsvorrichtung abfallende Spannung etwa 32 V übersteigt.

Eine bevorzugte Anwendung ist dadurch gekennzeichnet, dass die an der Schutz- und Ueberwachungsvorrichtung abfallende Spannung durch ein Durchschalten der Ueberbrückungsmittel begrenzt wird, wenn sie einen vorgegebenen Wert überschreitet.

Insbesondere werden die an der Schutz- und Ueberwachungsvorrichtung abfallende Spannung und/oder der durch die Schutz- und Ueberwachungsvorrichtung fliessende Strom gemessen und hinsichtlich ihres zeitlichen Verlaufes und der auftretenden Frequenzverteilung ausgewertet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: den stark vereinfachten Aufbau einer Turbogruppe mit je einer an der Antriebsseite und der Nichtantriebsseite angeordneten Schutz- und Ueberwachungsvorrichtung gemäss zwei bevorzugten Ausführungsbeispielen der Erfindung; und
- Fig. 2: in zwei Teilfiguren das Prinzipschaltbild einer Schutz- und Ueberwachungsvorrichtung, wie sie in Fig. 1 auf der Antriebsseite angeordnet ist (Fig. 2A), und die Belegung des dazugehörigen Anschlusssteckers (Fig. 2B).

### WEGE ZUR AUSFÜHRUNG DER ERFINDUNG

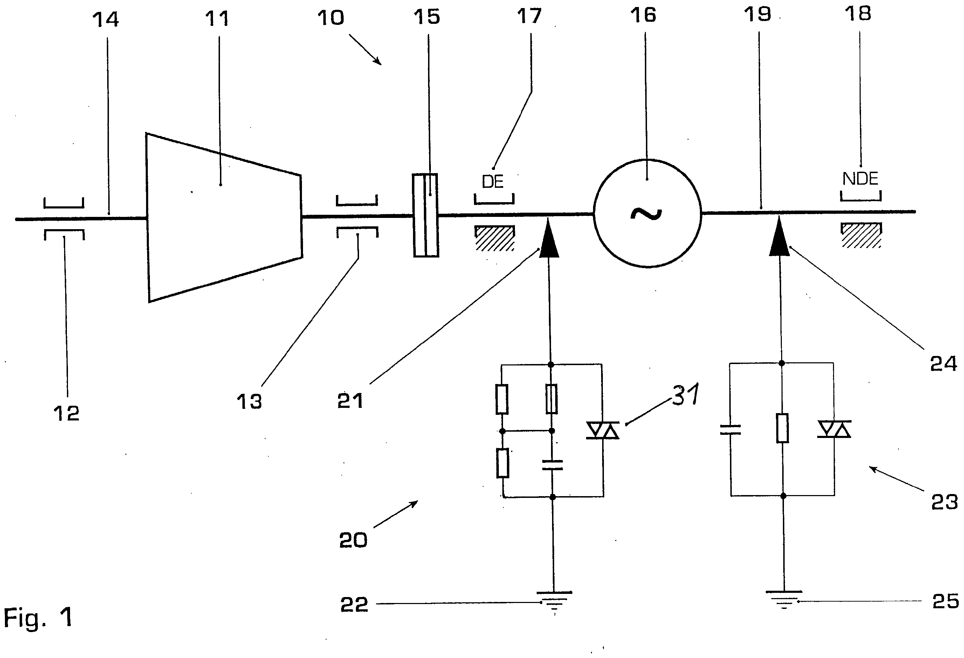

In Fig. 1 ist der stark vereinfachte Aufbau einer Turbogruppe mit je einer an der Antriebsseite und der Nichtantriebsseite angeordneten Schutz- und Ueberwachungsvorrichtung gemäss zwei bevorzugten Ausführungsbeispielen der Erfindung wiedergegeben. Die Turbogruppe 10 umfasst eine Turbine 11, die auf einer Turbinenwelle 14 angeordnet ist. Die Turbinenwelle 14 ist in zwei Lagern 12 und 13 drehbar gelagert. Die Turbogruppe 10 umfasst weiterhin einen Generator 16, durch den eine Generatorwelle 19 führt. Die Generatorwelle 19 ist auf der Antriebsseite DE (linke Seite in Fig. 1) über eine Kupplung 15 mit der Turbinenwelle 14 zu einem durchgehenden Wellenstrang verbunden. Die Generatorwelle 19 ist auf der Antriebsseite DE und auf der Nichtantriebsseite NDE jeweils in einem Lager 17 bzw. 18 drehbar gelagert. Das Lager auf der Nichtantriebsseite NDE ist üblicherweise gegen Erde isoliert, wie dies in Fig. 1 der EP-A1-0 271 678 und in Fig. 1 der DE-A1-197 42 622 dargestellt ist.

Bei der in Fig. 1 gezeigten Turbogruppe 10 sind zwei Möglichkeiten gezeigt, wie die Generatorwelle 19 mit einer Schutz- und Ueberwachungsvorrichtung ausgerüstet werden kann: Im einen Fall ist auf der Nichtantriebsseite NDE zwischen dem Lager 18 und dem Generator 16 eine Schutz- und Ueberwachungseinrichtung 23 angeordnet, die auf der einen Seite über eine Kontaktvorrichtung 24, z.B. ein Cu-Geflecht, schleifend mit der Generatorwelle 19 in elektrischem Kontakt steht, und auf der anderen Seite mit einem Erdungsanschluss 25 verbunden ist. Diese Schutz- und Ueberwachungsvorrichtung 23 enthält grundsätzlich eine RC-Parallelschaltung aus einem Widerstand und einer Kapazität, wie sie auch in der EP-A1-0 271 678 beschrieben ist. Darüber hinaus kann ein in Serie mit der RC-Parallelschaltung liegender Messwiderstand vorgesehen sein, der in Fig. 1 nicht eingezeichnet ist. Wesentlich ist ein Triac, der beim Durchschalten die RC-Parallelschaltung überbrückt und so an der Generatorwelle 19 auftretenden hohe Spannungen unschädlich macht.

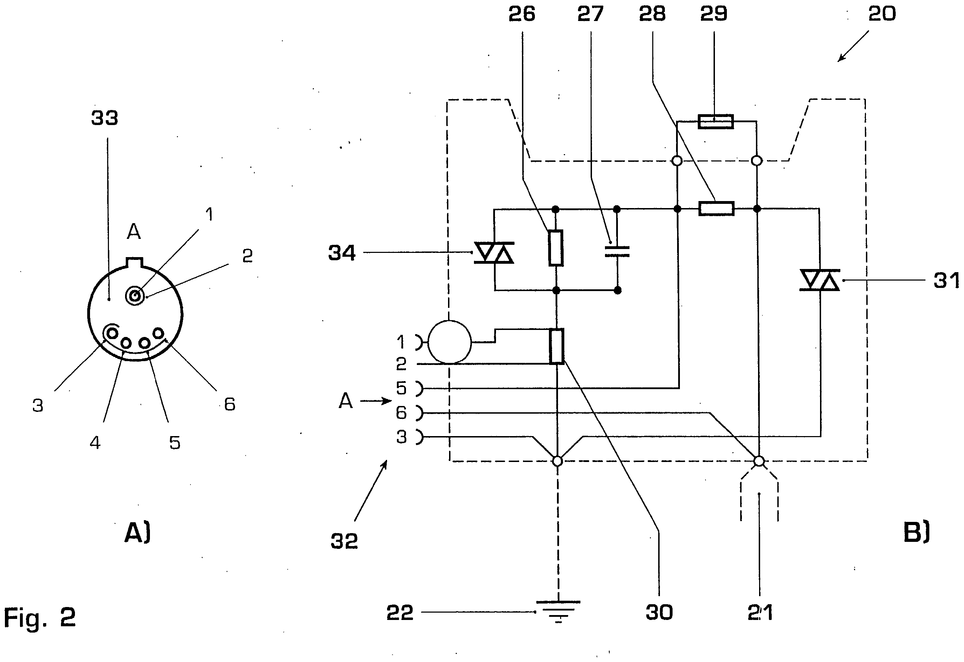

Die andere Möglichkeit besteht darin, eine Schutz- und Ueberwachungsvorrichtung 20 auf der Antriebsseite DE der Generatorwelle 19 zwischen dem Lager 17 und dem Generator 16 anzuordnen. Auch hier wird wellenseitig der Kontakt über eine (schleifende) Kontaktvorrichtung 21, z.B. ein Cu-Geflecht, hergestellt, während die andere Seite der Vorrichtung mit einem Erdungsanschluss 22 verbunden ist. Die antriebsseitige Schutz- und Ueberwachungseinrichtung 20, deren schaltungstechnischer Aufbau in Fig. 2B detaillierter dargestellt ist, umfasst ebenfalls eine RC-Parallelschaltung aus einem Widerstand 26 und einer Kapazität 27, die zwischen der Kontaktvorrichtung 21 und dem Erdungsanschluss 22 angeordnet ist. Zu der RC-Parallelschaltung 26, 27 sind parallel zur Spannungsbegrenzung ein Diodenpaar (34), beispielsweise mit einer Durchbruchspannung von ca. 1V, geschaltet und in Serie erdseitig ein Messwiderstand 30 und wellenseitig eine Sicherung 29 (im Beispiel: 2A/250V träge). Der Sicherung 29 ist ein (vergleichsweise hochohmiger) Widerstand 28 parallelgeschaltet. Parallel zur Serieschaltung aus Messwiderstand 30, RC-Parallelschaltung 26, 27 sowie Diodenpaar 34 und Parallelschaltung 28, 29 liegt ein Triac 31, der beim Durchschalten die Serieschaltung überbrückt. Dies ist dann der Fall, wenn die Generatorwelle 19 mit eine Hochspannungsquelle niedriger Impedanz (z.B. einer Netzspannung) in Berührung kommt. Der Triac 31 schaltet beispielsweise durch und schliesst die gesamte Schaltung kurz, wenn die Spannung an der Schaltung 32 V übersteigt. Nach dem Durchschalten wird die Spannung zwischen der Generatorwelle und Erde, selbst bei hohen Strömen, auf etwa 2 V begrenzt.

Die einzelnen Schaltungselemente der Schutz- und Ueberwachungsvorrichtung 20 sind in einem Modul (in Fig. 2B gestrichelt) untergebracht. Die Sicherung 29 ist auswechselbar aussen am Modul angeordnet. Das Modul kann über ein mehradriges Anschlusskabel 32 mit zugehörigem Anschlussstecker 33 mit entsprechend ausgelegten Ueberwachungs- oder Diagnoseeinrichtungen verbunden werden. Die Anschlüsse 1 und 2 gehören dabei zu einem Koaxialkabel, über das die am Messwiderstand 30 abfallende Spannung des zu messenden Stromes durch die Schutz- und Ueberwachungsvorrichtung 20 gemessen werden kann. Der Anschluss 3 dient zur direkten Verbindung mit dem Erdungsanschluss 22. Der Anschluss 6 ermöglicht eine direkte Spannungsmessung an der Generatorwelle 19, und der Anschluss 5 eine normale Spannungsmessung innerhalb der Schaltung.

Die Schutz- und Ueberwachungsvorrichtung 20 an der Antriebsseite der Generatorwelle 19 soll generell den sicheren Betrieb des Generators 16 gewährleisten, insbesondere wenn ein Metallgeflecht zur Erdung der Generatorwelle 19 verwendet wird. Sie wird speziell für die folgenden Zwecke eingesetzt:
- Als Schutzelement, um das Risiko von Schäden zu minimieren, die durch starke Wellenströme hervorgerufen werden können. Im Normalbetrieb sollte kein Strom durch die Vorrichtung (das Modul) 20 fliessen, weil die Erdung die Generatorwelle einfach auf einem niedrigen Potential hält. Wenn jedoch parallel zur Kontaktvorrichtung 21 mit dem Metallgeflecht eine zweite Erdverbindung der Welle vorhanden ist, fliesst ein Strom durch das Modul. Sobald dieser Strom zu gross wird, spricht die Sicherung 29 an und der Strom wird durch den parallelen Widerstand 28 begrenzt.
- Als Spannungsbegrenzer, wenn der Spannungsabfall über dem Widerstandspfad innerhalb des Moduls zu gross wird. In diesem Fall schaltet der Triac 31 durch (siehe oben).
- Zur Ableitung statischer Aufladungen von der Generatorwelle. Dies ist wegen des Widerstandes 28 auch dann möglich, wenn die Sicherung 29 angesprochen hat.
- Zum Kurzschliessen von Spannungsimpulsen, die vom Erregungssystem herrühren und kapazitiv durch die Kapazität zwischen Generatorwelle und der Rotorwindung eingekoppelt werden (siehe dazu auch die EP-A1-0 271 678).
- Als Strom- und Spannungssensor zur Ueberwachung des Generators oder für periodische Online-Messungen.
- Zur Detektion von Isolationsfehlern im von der Erde isolierten Lager 18 auf der Nichtantriebsseite.
- Zur Detektion von Schleifvorgängen der Generatorwelle 19 auf der Antriebsseite, respektive entlang des Wellenstrangs inklusive der Turbine 10.

### BEZUGSZEICHENLISTE

- 10: Turbogruppe
- 11: Turbine
- 12,13: Lager (Turbinenwelle)
- 14: Turbinenwelle
- 15: Kupplung
- 16: Generator
- 17,18: Lager (Generatorwelle)
- 19: Generatorwelle
- 20,23: Schutz- und Ueberwachungsvorrichtung (Modul)
- 21,24: Kontaktvorrichtung (z.B. Cu-Geflecht)
- 22,25: Erdungsanschluss
- 26,28: Widerstand
- 27: Kapazität
- 29: Sicherung
- 30: Messwiderstand
- 31: Triac
- 32: Anschlusskabel
- 33: Anschlussstecker
- 34: anti-parallel geschaltete Dioden
- DE: Antriebsseite (Driving End)
- NDE: Nichtantriebsseite (Non Driving End)

## Patentansprüche

1. Schutz- und Ueberwachungsvorrichtung (20, 23) zur Ueberwachung und Reduzierung von Wellenströmen und Wellenspannungen auf der Generatorwelle (19) eines elektrische Leistung erzeugenden Generators (16), welche Schutz- und Ueberwachungseinrichtung (20, 23) zwischen eine die Generatorwelle (19) kontaktierende Kontaktvorrichtung (21, 24) und einen Erdungsanschluss (22, 25) geschaltet ist und eine Parallelschaltung aus einem Widerstand (26) und einer Kapazität (27) umfasst, wobei die Parallelschaltung (26, 27) mit ihrem einen Ende mit der Kontaktvorrichtung (21, 24) und mit dem anderen Ende mit dem Erdungsanschluss (22, 25) verbunden wird, **dadurch gekennzeichnet, dass** Mittel (31) zur Ueberbrückung der Parallelschaltung (26, 27) bei einem Auftreten von Ueberspannung vorgesehen sind.

2. Schutz- und Ueberwachungsvorrichtung nach Anspruch 1, **dadurch gekennzeichnet, dass** zwischen der Parallelschaltung (26, 27) und dem Erdungsanschluss (22, 25) ein Messwiderstand (30) zu der Parallelschaltung (26, 27) in Serie geschaltet ist, und dass die Serieschaltung aus dem Messwiderstand (30) und der Parallelschaltung (26, 27) durch die Ueberbrückungsmittel (31) überbrückbar ist.

3. Schutz- und Ueberwachungsvorrichtung nach Anspruch 2, **dadurch gekennzeichnet, dass** zwischen der Parallelschaltung (26, 27) und der Kontaktvorrichtung (21, 24) eine Sicherung (29) zu der Parallelschaltung (26, 27) in Serie geschaltet ist, und dass die Serieschaltung aus dem Messwiderstand (30), der Parallelschaltung (26, 27) und der Sicherung (29) durch die Ueberbrückungsmittel (31) überbrückbar ist.

4. Schutz- und Ueberwachungsvorrichtung nach Anspruch 3, **dadurch gekennzeichnet, dass** parallel zu der Parallelschaltung (26, 27) ein Diodenpaar (34) geschaltet ist und dass die Serieschaltung aus dem Messwiderstand (30), der Parallelschaltung (26, 27, 34) und der Sicherung (29) durch die Ueberbrückungsmittel (31) überbrückbar ist.

5. Schutz- und Ueberwachungsvorrichtung nach Anspruch 3, **dadurch gekennzeichnet, dass** die Sicherung (29) einen Nennwert von etwa 2 A aufweist.

6. Schutz- und Ueberwachungsvorrichtung nach Anspruch 3, **dadurch gekennzeichnet, dass** der Sicherung (29) ein hochohmiger Widerstand (28) parallel geschaltet ist.

7. Schutz- und Ueberwachungsvorrichtung nach einem der Ansprüche 1 bis 6, **dadurch gekennzeichnet, dass** die Ueberbrückungsmittel ein steuerbares Schaltelement (31) umfassen.

8. Schutz- und Ueberwachungsvorrichtung nach Anspruch 7, **dadurch gekennzeichnet, dass** das steuerbare Schaltelement (31) durchschaltet, wenn die an der Schutz- und Ueberwachungsvorrichtung (20, 23) abfallende Spannung etwa 32 V übersteigt.

9. Anwendung einer Schutz- und Ueberwachungsvorrichtung (20) nach einem der Ansprüche 1 bis 8 zum Schutz und zur Ueberwachung eines Generators (16), welcher eine Antriebsseite (DE) und eine Nichtantriebsseite (NDE) aufweist, **dadurch gekennzeichnet, dass** die Schutz- und Ueberwachungsvorrichtung (20) auf der Antriebsseite (DE) angeordnet ist.

10. Anwendung nach Anspruch 9, **dadurch gekennzeichnet, dass** die an der Schutz- und Ueberwachungsvorrichtung (20) abfallende Spannung durch ein Durchschalten der Ueberbrückungsmittel (31) begrenzt wird, wenn sie einen vorgegebenen Wert überschreitet.

11. Anwendung nach einem der Ansprüche 9 oder 10, **dadurch gekennzeichnet, dass** die an der Schutz- und Ueberwachungsvorrichtung (20) abfallende Spannung und/oder der durch die Schutz- und Ueberwachungsvorrichtung (20) fliessende Strom gemessen und hinsichtlich ihres zeitlichen Verlaufes und der auftretenden Frequenzverteilung ausgewertet werden.

## Claims

1. Protective and monitoring apparatus (20, 23) for monitoring and reducing shaft currents and shaft voltages on the generator shaft (19) of a generator (16) which produces electrical power, which protective and monitoring device (20, 23) is connected between a contact apparatus (21, 24), which makes contact with the generator shaft (19), and a grounding connection (22, 25) and comprises a parallel circuit formed by a resistance (26) and a capacitance (27), with one end of the parallel circuit (26, 27) being connected to the contact apparatus (21, 24) and its other end being connected to the grounding connection (22, 25), **characterized in that** means (31) are provided for bridging the parallel circuit (26, 27) when an overvoltage occurs.

2. Protective and monitoring apparatus according to Claim 1, **characterized in that** a measurement resistance (30) is connected in series with the parallel circuit (26, 27), between the parallel circuit (26, 27) and the grounding connection (22, 25), and **in that** the series of circuits formed by the measurement resistance (30) and the parallel circuit (26, 27) can be bridged by the bridging means (31).

3. Protective and monitoring apparatus according to Claim 2, **characterized in that** a fuse (29) is connected in series with the parallel circuit (26, 27), between the parallel circuit (26, 27) and the contact apparatus (21, 24), and **in that** the series circuit formed from the measurement resistance (30), the parallel circuit (26, 27) and the fuse (29) can be bridged by the bridging means (31).

4. Protective and monitoring apparatus according to Claim 3, **characterized in that** a pair of diodes (34) is connected in parallel with the parallel circuit (26, 27), and **in that** the series circuit formed from the measurement resistance (30), the parallel circuit (26, 27, 34) and the fuse (29) can be bridged by the bridging means (31).

5. Protective and monitoring apparatus according to Claim 3, **characterized in that** the fuse (29) has a rated value of approximately 2 A.

6. Protective and monitoring apparatus according to Claim 3, **characterized in that** the fuse (29) is connected in parallel with a high-value resistance (28) .

7. Protective and monitoring apparatus according to one of Claims 1 to 6, **characterized in that** bridging means have a controllable switching element (31).

8. Protective and monitoring apparatus according to Claim 7, **characterized in that** the controllable switching element (31) is switched on when the voltage which is dropped across the protective and monitoring apparatus (20, 23) exceeds approximately 32 V.

9. Use of a protective and monitoring apparatus (20) according to one of Claims 1 to 8 for protecting and for monitoring a generator (16) which has a drive end (DE) and a non drive end (NDE), **characterized in that** the protective and monitoring apparatus (20) is arranged on the drive end (DE).

10. Use according to Claim 9, **characterized in that** the voltage which is dropped across the protective and monitoring apparatus (20) is limited by switching on the bridging means (31) when said voltage exceeds a predetermined value.

11. Use according to one of Claims 9 or 10, **characterized in that** the voltage which is dropped across the protective and monitoring apparatus (20) and/or the current which is flowing through the protective and monitoring apparatus (20) is measured, and its waveform and the frequency distribution that occurs are evaluated.

## Revendications

1. Dispositif de protection et de surveillance (20, 23) pour surveiller et à réduire les courants d'arbre et les tensions d'arbre sur l'arbre de générateur (19) d'un générateur (16) générant de l'énergie électrique, lequel dispositif de protection et de surveillance (20, 23) est connecté entre un dispositif de contact (21, 24) en contact avec l'arbre de générateur (19) et une borne de terre (22, 25) et comprend un circuit parallèle constitué d'une résistance (26) et d'un condensateur (27), dans lequel le circuit parallèle (26, 27) est connecté par l'une de ses extrémités au dispositif de contact (21, 24) et par l'autre extrémité à la borne de terre (22, 25), caractérisé en ce en ce qu'il est prévu des moyens (31) destinés à ponter la connexion parallèle (26, 27) lorsqu'une surtension se produit.

2. Dispositif de protection et de surveillance selon la revendication 1, **caractérisé en ce qu'**une résistance de mesure (30) est connectée en série à la connexion parallèle (26, 27) entre la connexion parallèle (26, 27) et la connexion de terre (22, 25), et **en ce que** le circuit série constitué de la résistance de mesure (30) et du circuit parallèle (26, 27) peut être ponté par les moyens de pontage (31).

3. Dispositif de protection et de surveillance selon la revendication 2, **caractérisé en ce qu'**un fusible (29) est connecté en série au circuit parallèle (26, 27) entre le circuit parallèle (26, 27) et le dispositif de contact (21, 24), et **en ce que** le circuit série constitué de la résistance de mesure (30), du circuit parallèle (26, 27) et du fusible (29) peut être ponté par les moyens de pontage (31).

4. Dispositif de protection et de surveillance selon la revendication 3, **caractérisé en ce qu'**une paire de diodes (34) est connectée en parallèle au circuit parallèle (26, 27) et **en ce que** le circuit série constitué de la résistance de mesure (30), du circuit parallèle (26, 27, 34) et du fusible (29) peut être ponté par les moyens de pontage (31).

5. Dispositif de protection et de surveillance selon la revendication 3, **caractérisé en ce que** le fusible (29) a une valeur nominale d'environ 2 A.

6. Dispositif de protection et de surveillance selon la revendication 3, **caractérisé en ce qu'**une résistance de valeur élevée (28) est connectée en parallèle au fusible (29).

7. Dispositif de protection et de surveillance selon l'une des revendications 1 à 6, **caractérisé en ce que** les moyens de pontage comprennent un élément de commutation commandable (31).

8. Dispositif de protection et de surveillance selon la revendication 7, **caractérisé en ce que** l'élément de commutation commandable (31) devient passant lorsque la chute de tension aux bornes du dispositif de protection et de surveillance (20, 23) dépasse environ 32 V.

9. Utilisation d'un dispositif de protection et de surveillance (20) selon l'une des revendications 1 à 8 pour protéger et surveiller un générateur (16) qui présente un côté d'entraînement (DE) et un côté de nonentraînement (NDE), **caractérisée en ce que** le dispositif de protection et de surveillance (20) est disposé sur le côté d'entraînement (DE).

10. Application selon la revendication 9, **caractérisée en ce que** la chute de tension aux bornes du dispositif de protection et de surveillance (20) est limitée en rendant passants les moyens de pontage (31) si elle dépasse une valeur prédéterminée.

11. Application selon l'une des revendications 9 ou 10, **caractérisée en ce que** la tension s'abaissant aux bornes du dispositif de protection et de surveillance (20) et/ou le courant passant à travers le dispositif de protection et de surveillance (20) sont mesurés et évalués en fonction de leur évolution dans le temps et de la distribution de fréquence qui se produit.
